# FASCICULE DE BREVET EUROPEEN

(11) **EP 0 655 596 B1**
(45) Date de publication et mention de la délivrance du brevet: **27.08.1997**
(21) Numéro de dépôt: 94402267.2
(22) Date de dépôt: 10.10.1994
(51) Int. Cl.: F25J 3/08, C01B 3/50, F25J 3/06

(54) **Procédé et installation de purification cryogénique d'hydrogène**
Verfahren und Anlage zur kryogenischen Reinigung von Wasserstoff
Process and plant for the cryogenic purification of hydrogen

(30) Priorité: 26.10.1993 FR 9312730
(43) Date de publication de la demande: 31.05.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Denis, Catherine, F-94500 Champigny Sur Marne (FR); Gauthier, Pierre, F-94260 Fresnes (FR); Villard, Jean-Claude, F-38130 Echirolles (FR)
(74) Mandataire: Mercey, Fiona Susan

(56) Documents cités:
- FR-A- 1 457 243
- FR-A- 2 546 283
- GB-A- 1 304 568

## Description

La présente invention est relative à un procédé de purification cryogénique d'hydrogène impur, du type décrit dans le préambule de la revendication 1.

Les pressions dont il est question ci-dessous sont des pressions absolues.

Le FR-A-2 546 283 décrit un procédé de ce type, dans lequel la turbine est alimentée par de l'hydrogène purifié sous la haute pression.

Les normes de protection de l'environnement imposent des teneurs résiduelles en soufre de plus en plus faibles dans les combustibles et carburants, créant un besoin supplémentaire en hydrogène et nécessitant une augmentation de la capacité de traitement des réacteurs d'hydrodésulfuration d'hydrocarbures (par exemple de gasole) existants.

L'une des solutions est d'augmenter la pression partielle d'hydrogène en purifiant l'hydrogène issu de sources classiques, notamment celui issu de réformeurs catalytiques.

La purification par voie cryogénique, comparée à d'autres procédés, est économiquement intéressante lorsque la capacité d'hydrogène à purifier est importante et se caractérise par une pureté finale d'hydrogène voisine de 98% molaire, un rendement de récupération élevé, voisin de 96%, et une consommation d'énergie faible.

La tenue en froid de ce type de procédé est essentiellement assurée par la détente libre des impuretés, principalement constituées d'hydrocarbures. Pour un gaz de réformage catalytique, dont la composition typique est

| | |
|---|---|
| H2 | 84 % molaire |
| CH4 | 6 % molaire |
| C2H6 | 5 % molaire |
| C3H8 | 3 % molaire |
| C4H10 | 2 % molaire, |

la teneur en méthane est insuffisante pour assurer par détente libre la puissance frigorifique nécessaire à la partie la plus froide de la ligne d'échange thermique, et une turbine de détente de faible puissance doit être prévue pour fournir le complément nécessaire.

S'agissant de faibles puissances générées par la détente d'un petit débit d'hydrogène à haute pureté dont le poids moléculaire est voisin de 2 kg/kmole, l'emploi de turbines à paliers gaz, permettant des vitesses de rotation très élevées, est particulièrement avantageux.

Le fonctionnement des turbines à paliers gaz implique l'utilisation de gaz dits "gaz utilités", prélevés sur le débit d'hydrogène purifié, pour assurer les deux fonctions classiques suivantes :
- d'une part, un faible débit à température ambiante, appelé gaz de barrage, est injecté dans le labyrinthe, prévu entre la roue et les paliers, à une pression légèrement inférieure à la pression interstitielle générée derrière la roue de la turbine par la fuite entre rotor et stator de gaz à détendre. Ce gaz de barrage limite le débit de fuite froid et le réchauffe avant que leur mélange ne s'écoule vers les paliers de sustentation du rotor;
- d'autre part, un débit plus important à température ambiante, appelé gaz de paliers, est injecté dans les paliers de sustentation, où il subit une détente généralement sonique.

Les gaz utilités sont alors collectés et envoyés vers le réseau de gaz résiduaire de l'installation.

L'invention a pour but de fournir un procédé conduisant à une valorisation importante du gaz utilités, et à un rendement élevé du procédé par une perte minimale d'hydrogène purifié.

A cet effet, l'invention a pour objet un procédé du type précité, caractérisé par la partie caractérisante de la revendication 1.

Le procédé peut de plus comporter de façon préférentielle une ou plusieurs des caractéristiques des revendications 2 à 6.

L'invention a également pour objet une installation destinée à la mise en oeuvre du procédé défini ci-dessus. Cette installation est décrite dans la revendication 7.

Un exemple de mise en oeuvre de l'invention va maintenant être décrit en regard des dessins annexés, sur lesquels :
- La figure 1 représente schématiquement une installation d'épuration d'hydrogène impur conforme à l'invention ; et
- la figure 2 représente schématiquement la turbine à paliers gaz de cette installation.

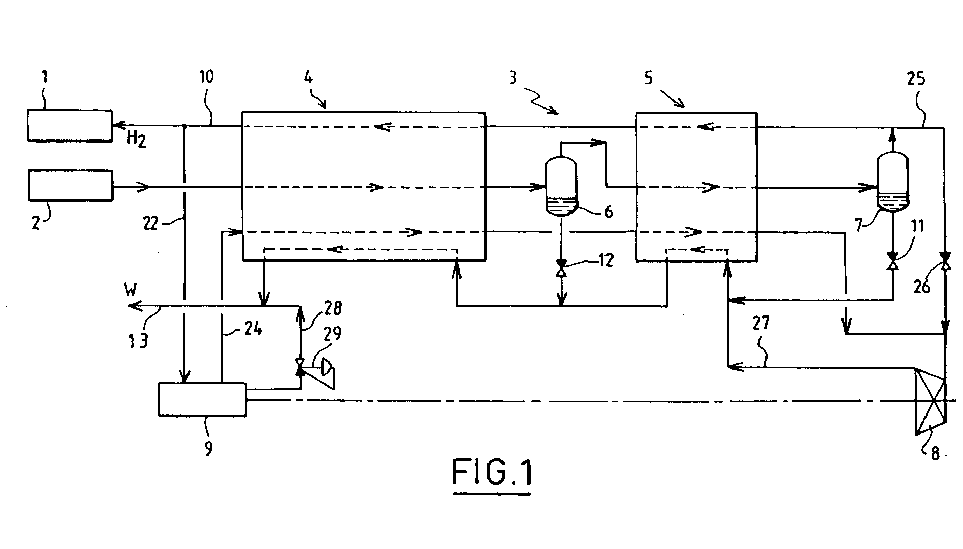

L'installation représentée à la figure 1 est destinée à fournir à un réacteur 1 d'hydrodésulfuration d'hydrocarbures de l'hydrogène relativement pur, typiquement à une pureté de l'ordre de 96 à 98 %, sous une haute pression PO de l'ordre de 50 bars. Pour cela, l'installation est alimentée en hydrogène impur provenant d'un réformeur catalytique 2 et ayant typiquement la composition indiquée plus haut. C'est ce gaz qui constitue l'hydrogène impur à purifier par voie cryogénique.

L'invention comprend essentiellement une ligne d'échange thermique 3, du type à échange de chaleur indirect à contre-courant, qui comporte une partie chaude 4 et une partie froide 5, un séparateur de phases "chaud" 6, un séparateur de phases "froid" 7, et une turbine à paliers gaz 8. Pour la clarté du dessin, on a schématisé séparément en 9 sur la figure 1 l'ensemble des dispositifs de la turbine utilisant du gaz utilités (labyrinthe et paliers).

L'hydrogène impur, sortant de l'appareil 2 sous la pression de production PO (aux pertes de charge près), est refroidi jusqu'à une température intermédiaire en 4, puis envoyé dans le séparateur de phases 6, où l'ensemble des impuretés autres que le méthane se condensent en quasi-totalité. La phase vapeur issue de ce séparateur poursuit son refroidissement en 5 jusqu'au bout froid de la ligne d'échange thermique, puis est envoyée dans le séparateur de phases 7. La phase vapeur issue de ce dernier est en presque totalité réchauffée en 5 puis en 4, et sort au bout chaud de la ligne d'échange thermique, via une conduite 10, en tant qu'hydrogène purifié produit.

L'essentiel du froid nécessaire est obtenu en détendant à une basse pression P1 dans une vanne de détente 11 la phase liquide du séparateur 7, en la vaporisant en 5, en la réunissant à la phase liquide du séparateur 6 préalablement détendue à P1 dans une vanne de détente 12, et en vaporisant et réchauffant l'ensemble en 4. Le courant résultant est évacué au bout chaud de la ligne d'échange thermique, en tant que gaz résiduaire W de l'installation, via une conduite 13, et ce gaz se trouve à une pression suffisante, par exemple de l'ordre de 3 à 4 bars, pour être distribué dans le réseau de gaz de chauffage du site (réseau dit "fuel-gas").

Du fait de la faible teneur en méthane de l'hydrogène impur, ceci ne suffit pas pour assurer le maintien en froid de la partie froide de l'installation. Un complément de froid est donc apporté par la turbine 8, dont l'échappement, à la basse pression P1 de 3 à 4 bars, est injecté dans le fluide sortant de la vanne de détente 11, au bout froid de la ligne d'échange thermique, pour abaisser la température de ce bout froid et donc augmenter le degré de pureté de l'hydrogène produit.

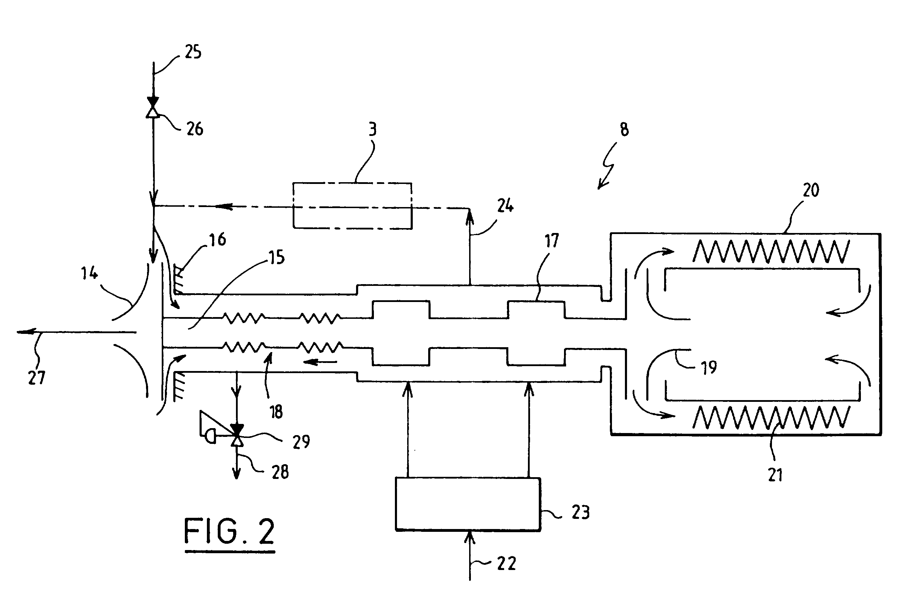

Comme schématisé sur la figure 2, la turbine 8 comprend une roue 14 liée à un arbre 15 qui tourne dans un stator 16 au moyen de paliers gaz 17. Un labyrinthe 18 est prévu entre la roue et ces paliers, et une extrémité de l'arbre 15 située au-delà des paliers porte une roue de compresseur-frein 19. Cette dernière tourne dans un carter 20 muni d'un dispositif réfrigérant 21. Le gaz de sustentation est prélevé sur la conduite 10 via une conduite 22 qui aboutit à un stockage-tampon 23 maintenu à une pression intermédiaire de l'ordre de 30 bars.

Le gaz de sustentation détendu sort de l'ensemble 9 via une conduite 24 après une détente sonique, sous une pression que l'on règle, par des moyens appropriés non représentés, sur une valeur intermédiaire comprise entre 5 et 15 bars. Après refroidissement du bout chaud au bout froid de la ligne d'échange thermique 3, ce gaz est envoyé à l'entrée de la turbine et détendu par celle-ci à la basse pression de 3 à 4 bars.

Si la puissance frigorifique ainsi produite est insuffisante, on peut compléter l'alimentation de la turbine par un débit d'hydrogène purifié issu du séparateur 7, véhiculé par une conduite 25 muni d'une vanne de détente 26.

L'hydrogène basse pression s'échappant de la turbine est injecté via une conduite 27 dans le fluide issu de la vanne de détente 11.

Il résulte de ce qui précède que la pression d'entrée de la turbine est inférieure à la pression de sortie des paliers (5 à 15 bars), qui est donc a fortiori supérieure à la pression interstitielle Pᵢ. Afin d'éviter une fuite de gaz à température ambiante des paliers vers la roue cryogénique, on soutire un débit de gaz du labyrinthe 18 à une pression P ᵢ - ε légèrement inférieure à ladite pression interstitielle. Ce soutirage s'effectue via une conduite 28 équipée d'une vanne de contrôle de pression 29. Avec les valeurs de pression choisies dans cet exemple, cette pression est supérieure à la pression P1 du gaz résiduaire, et le gaz issu de la vanne de contrôle 29 peut être injecté dans le gaz résiduaire, soit, comme représenté, au bout chaud de la ligne d'échange thermique, soit, en variante, au bout froid de la ligne d'échange thermique, après refroidissement dans cette dernière.

On voit ainsi que la totalité du gaz de sustentation est valorisée sous trois aspects : d'abord, par sa détente en 8, pour produire l'essentiel du froid nécessaire ; puis pour abaisser la température froide par mélange avec le méthane à vaporiser ; puis pour être utilisée dans le réseau "fuel gas". De plus, la quantité d'hydrogène haute pression envoyée à la turbine est réduit au strict minimum, ce qui correspond à un rendement maximal du procédé.

Eventuellement, si les conditions économiques le justifient malgré le faible débit mis en jeu, on peut refroidir en 4 puis 5 le gaz soutiré en 28, puis l'injecter également dans le méthane détendu en 11.

## Revendications

1. Procédé de purification cryogénique d'hydrogène impur, du type dans lequel l'hydrogène impur est refroidi sous une haute pression P0 à une température suffisamment basse pour condenser une proportion prédéterminée des impuretés, par échange de chaleur dans une ligne d'échange thermique (3) avec l'hydrogène purifié et avec une fraction résiduaire contenant les impuretés condensées préalablement détendues (en 11, 12) à une basse pression P1, un appoint de puissance frigorifique étant fourni par détente d'hydrogène purifié dans une turbine (8) à paliers gaz comprenant une roue (14) liée à un arbre (15) qui tourne dans un stator (16) au moyen de paliers gaz (17), le stator étant alimenté par un gaz de sustentation, et un labyrinthe (18) prévu entre la roue et ces paliers, et l'hydrogène détendu étant ajouté aux impuretés légères détendues au bout froid de la ligne d'échange thermique, caractérisé en ce qu'on alimente la turbine (8) avec le gaz de sustentation sortant de ses paliers (17), après refroidissement de ce gaz dans la ligne d'échange thermique, et on soutire un débit de fuite d'hydrogène au niveau du labyrinthe (18) de la turbine, sous une pression légèrement inférieure à la pression interstitielle Pi qui règne entre la roue (14) et le stator (16) de cette turbine.

2. Procédé suivant la revendication 1, caractérisé en ce qu'on complète l'alimentation de la turbine (8) par un débit d'hydrogène purifié détendu dans une vanne de détente (26).

3. Procédé suivant la revendication 1 ou 2, caractérisé en ce qu'on ajoute le débit de fuite, éventuellement après détente dans une vanne de détente (29), au gaz résiduaire à la température ambiante.

4. Procédé suivant la revendication 1 ou 2, caractérisé en ce qu'on ajoute le débit de fuite, après refroidissement et éventuellement détente, à ladite fraction résiduaire détendue.

5. Procédé suivant l'une quelconque des revendications 1 à 4, caractérisé en ce que l'hydrogène impur est un gaz de réformage catalytique.

6. Procédé suivant l'une quelconque des revendications 1 à 5, caractérisé en ce que l'hydrogène purifié est utilisé dans un hydrotraitement d'hydrocarbures (1).

7. Installation de purification cryogénique d'hydrogène impur, du type comprenant une ligne d'échange thermique (3), au moins un séparateur de phases (7) au bout froid de cette ligne d'échange thermique, une turbine (8) de détente d'hydrogène à paliers gaz comprenant une roue (14) liée à un arbre (15) qui tourne dans un stator (16) au moyen de paliers gaz (17), et un labyrinthe (18) prévu entre la roue et ces paliers, le stator étant alimenté par un gaz de sustentation, des moyens pour faire circuler un courant d'hydrogène impur dans un sens dans la ligne d'échange thermique, des moyens pour détendre à une basse pression la phase liquide du séparateur de phases (7), des moyens pour ajouter de l'hydrogène sous la basse pression dans la fraction résiduaire résultant de cette détente, et des moyens pour faire circuler le mélange obtenu sous la basse pression à contre-courant de l'hydrogène impur, caractérisée en ce que la ligne d'échange thermique comporte des passages de refroidissement du gaz de sustentation sortant des paliers (17) de la turbine (8), ces passages étant reliés à l'entrée de la turbine au bout froid de la ligne d'échange thermique, et en ce que l'installation comprend des moyens (28, 29) pour soutirer un débit de fuite d'hydrogène au niveau du labyrinthe (18) de la turbine, sous une pression légèrement inférieure à la pression interstitielle Pi qui règne entre la roue (14) et le stator (16) de cette turbine.

8. Installation suivant la revendication 7, caractérisée en ce que le sommet du séparateur de phases (7) est également relié à l'entrée de la turbine (8) via une vanne de détente (26).

9. Installation suivant la revendication 7 ou 8, caractérisée en ce qu'elle comprend une vanne (29) de détente dudit débit de fuite, reliée en aval à la conduite de gaz résiduaire de l'installation, au bout chaud de la ligne d'échange thermique (3).

10. Installation suivant la revendication 7 ou 8, caractérisée en ce qu'elle comprend une vanne (29) de détente dudit débit de fuite, reliée en aval, via des passages de refroidissement de cette ligne d'échange thermique, à la conduite qui véhicule ladite fraction résiduaire détendue.

11. Installation suivant l'une quelconque des revendications 7 à 10, reliée en amont à un appareil (2) de réformage catalytique.

12. Installation suivant l'une quelconque des revendications 7 à 11, dont la conduite (10) de production d'hydrogène purifié est reliée, au bout chaud de la ligne d'échange thermique (3), à un appareil (1) d'hydrodésulfuration d'hydrocarbures.

## Patentansprüche

1. Verfahren zur kryogenen Reinigung von Rohwasserstoff, bei dem der Rohwasserstoff unter einem hohen Druck PO auf eine ausreichend tiefe Temperatur gekühlt wird, um einen vorbestimmten Anteil von Verunreinigungen im Wärmeaustausch in einem Wärmeaustauscher (3) gegen gereinigten Wasserstoff und gegen einen die zuvor kondensierten, auf einen Druck P1 entspannten (in 11, 12) Verunreinigungen umfassenden Restanteil zu kondensieren, wobei eine zusätzliche Kälteleistung mittels Entspannung von gereinigtem Wasserstoff in einer Turbine (8) mit Luftlagern erzeugt wird, die ein mit einer sich in einem Stator (16) in den Luftlagern (17) drehenden Welle (15) verbundenes Rad (14), wobei der Stator durch ein Stützgas gespeist wird, und eine zwischen dem Rad und den Lagern vorgesehene Labyrinthdichtung (18) umfaßt, und wobei der entspannte Wasserstoff am kalten Ende des Wärmeaustauschers den entspannten, leichten Verunreinigungen zugegeben wird, dadurch gekennzeichnet, daß die Turbine (8) mit dem aus den Lagern (17) austretenden Stützgas nach Abkühlung dieses Gases im Wärmeaustauscher gespeist wird, und ein Wasserstoffleckstrom in Höhe der Labyrinthdichtung (18) der Turbine unter einem etwas kleineren Druck als dem interstitiellen Druck Pi, der zwischen dem Rad (14) und dem Stator (16) dieser Turbine herrscht, entnommen wird.

2. Verfahren nach Anspruch 1, dadurch gekennzeichnet, daß die Speisung der Turbine (8) mittels eines in einem Druckminderventil (26) entspannten, gereinigten Wasserstoffstroms ergänzt wird.

3. Verfahren nach Anspruch 1 oder 2, dadurch gekennzeichnet, daß der Leckstrom, gegebenenfalls nach Entspannung in einem Druckminderventil (29), einem auf Umgebungstemperatur befindlichen Restgas zugegeben wird.

4. Verfahren nach Anspruch 1 oder 2, dadurch gekennzeichnet, daß der Leckstrom nach Abkühlung und gegebenenfalls Entspannung dem entspannten Restanteil zugegeben wird.

5. Verfahren nach einem der Ansprüche 1 bis 4, dadurch gekennzeichnet, daß der Rohwasserstoff ein Gas aus einer katalytischen Umsetzung ist.

6. Verfahren nach einem der Ansprüche 1 bis 5, dadurch gekennzeichnet, daß der gereinigte Wasserstoff zur Wasserstoffbehandlung von Kohlenwasserstoffen (1) verwendet wird.

7. Vorrichtung zur kryogenen Reinigung von Rohwasserstoff, umfassend einen Wärmeaustauscher (3), mindestens einen Phasenabscheider (7) am kalten Ende des Wärmeaustauschers, eine Turbine (8) mit Luftlagern zur Entspannung von Wasserstoff, die ein mit einer sich in einem Stator (16) in den Luftlagern (17) drehenden Welle (15) verbundenes Rad (14) und eine zwischen dem Rad und den Lagern vorgesehene Labyrinthdichtung (18) aufweist, wobei der Stator durch ein Stützgas gespeist wird, Mittel zum Zirkulieren eines Rohwasserstoffstroms in einer bestimmten Richtung in dem Wärmeaustauscher, Mittel zum Entspannen der flüssigen Phase aus dem Phasenabscheider (7) auf Niederdruck, Mittel zum Zugeben des unter Niederdruck stehenden Wasserstoffs zu dem durch die Entspannung entstehenden Restanteil, und Mittel zum Zirkulieren des erhaltenen Gemischs unter Niederdruck im Gegenstrom zu dem Rohwasserstoff, dadurch gekennzeichnet, daß der Wärmeaustauscher Kühlkanäle für das aus den Lagern (17) der Turbine (8) austretende Stützgas aufweist, wobei die Kanäle mit dem Turbineneinlaß am kalten Ende des Wärmeaustauschers verbunden sind, und daß die Vorrichtung Mittel (28, 29) zur Entnahme eines Wasserstoffleckstroms in Höhe der Labyrinthdichtung (18) der Turbine unter einem etwas kleinerem Druck als dem interstitiellen Druck Pi, der zwischen dem Rad (14) und dem Stator (16) dieser Turbine herrscht, aufweist.

8. Vorrichtung nach Anspruch 7, dadurch gekennzeichnet, daß der Scheitelpunkt des Phasenabscheiders (7) über ein Druckminderventil (26) ebenfalls mit dem Einlaß der Turbine (8) verbunden ist.

9. Vorrichtung nach Anspruch 7 oder 8, dadurch gekennzeichnet, daß sie am warmen Ende des Wärmeaustauschers (3) ein stromab mit der Restgasleitung der Vorrichtung verbundenes Ventil (29) zum Entspannen des Leckstroms aufweist.

10. Vorrichtung nach Anspruch 7 oder 8, dadurch gekennzeichnet, daß sie ein stromab über Kältekanäle des Wärmeaustauschers mit der den Restanteil führenden Leitung verbundenes Ventil (29) zum Entspannen des Leckstroms aufweist.

11. Vorrichtung nach einem der Ansprüche 7 bis 10, stromauf verbunden mit einer Einrichtung (2) zur katalytischen Umsetzung.

12. Vorrichtung nach einem der Ansprüche 7 bis 11, deren Produktionsleitung (10) für gereinigten Wasserstoff am warmen Ende des Wärmeaustauschers (3) mit einer Einrichtung (1) zur Entschwefelung von Kohlenwasserstoffen mittels Wasserstoff verbunden ist.

## Claims

1. Process for the cryogenic purification of impure hydrogen, of the type in which impure hydrogen is cooled below a high pressure P0 to a sufficiently low temperature to condense a predetermined proportion of impurities, by heat exchange in a heat exchange line (3) with purified hydrogen and with a residual fraction containing the condensed impurities previously expanded (in 11, 12) to a low pressure P1, additional cooling power being provided by expanding purified hydrogen in a turbine (8) having gas bearings, comprising a wheel (14) connected to a shaft (15) which revolves in a stator (16) by means of gas bearings (17), the stator being supplied with a supporting gas, and a labyrinth (18) provided between the wheel and these bearings, and the expanded hydrogen being added to the impurities which are expanded at the cold end of the heat exchange line, characterized in that the turbine (8) is supplied with the supporting gas leaving the bearings (17) after cooling this gas in the heat exchange line, and a leaked flow of hydrogen is withdrawn from the labyrinth (18) of the turbine, under a pressure slightly less than the interstitial pressure Pi which exists between the wheel (14) and the stator (16) of this turbine.

2. Process according to claim 1, characterized in that the turbine (8) is additionally supplied by a flow of purified hydrogen expanded in an expansion valve (26).

3. Process according to claim 1 or 2, characterized in that the leaked flow gas, possibly after expansion in an expansion valve (29), is added to the residual gas at ambient temperature.

4. Process according to claim 1 or 2, characterized in that the leaked flow of gas is added, after cooling and possible expansion, to the said residual expanded fraction.

5. Process according to any one of claims 1 to 4, characterized in that the impure hydrogen is a catalytic reforming gas.

6. Process according to any one of claims 1 to 5, characterized in that the purified hydrogen is used in the hydrotreatment of hydrocarbons (1).

7. Plant for the cryogenic purification of impure hydrogen, of the type comprising a heat exchange line (3), at least one phase separator (7) at the cold end of this heat exchange line, a hydrogen expansion turbine (8) having gas bearings comprising a wheel (14) connected to a shaft (15) which revolves in a stator (16) by means of gas bearings (17), and a labyrinth (18) provided between the wheel and these bearings, the stator being supplied by a supporting gas, means for circulating a flow of impure hydrogen in one direction in the heat exchange line, means for reducing the pressure of the liquid phase of the phase separator (7) to a low pressure, means for adding hydrogen at low pressure to the residual fraction resulting from this reduction in pressure, and means for circulating the mixture obtained at the low pressure counter-current to the impure hydrogen, characterized in that the heat exchange line comprises passages for cooling the supporting gas leaving the bearings (17) of the turbine (8), these passages being connected to the inlet of the turbine at the cold end of the heat exchange line, and in that the plant comprises means (28, 29) for withdrawing a leaked flow of hydrogen from the labyrinth (18) of the turbine, at a pressure slightly lower than the interstitial pressure Pi which exists between the wheel (14) and the stator (16) of this turbine.

8. Plant according to claim 7, characterized in that the top of the phase separator (7) is also connected to the inlet of the turbine (8) via an expansion valve (26).

9. Plant according to claim 7 or 8, characterized in that it comprises a valve (29) for expanding the said leakage flow, connected downstream from the residual gas pipe of the plant, at the warm end of the heat exchange line (3).

10. Plant according to claim 7 or 8, characterized in that it comprises a valve (29) for expanding the said leakage flow, connected downstream, via cooling passages in this heat exchange line, to the pipe which conveys the said expanded residual fraction.

11. Plant according to any one of claims 7 to 10, connected upstream from a catalytic reforming apparatus (2).

12. Plant according to any one of claims 7 to 11, of which the pipe (10) carrying the purified hydrogen produced is connected, at the warm end of the heat exchange line (3), to a hydrocarbon hydrodesulphuration apparatus (1).
